# EUROPÄISCHE PATENTSCHRIFT

(11) **EP 0 303 658 B1**
(45) Veröffentlichungstag und Bekanntmachung des Hinweises auf die Patenterteilung: **18.05.1994**
(21) Anmeldenummer: 88901938.6
(22) Anmeldetag: 26.02.1988
(51) Int. Cl.: A23L 2/26

(54) **VERFAHREN ZUR HERSTELLUNG UND DEM NEUARTIGEN VERTRIEB VON MIT MOLEKULAREM SAUERSTOFF GESÄTTIGTEN SCHUTZGETRÄNKEN**
PROCESS FOR PRODUCING AND SELLING DRINKS SATURATED WITH MOLECULA OXYGEN
PROCEDE DE PRODUCTION ET DE VENTE DE BOISSONS SATUREES AVEC DE L'OXYGENE MOLECULAIRE

(30) Priorität: 27.02.1987 HU 80387
(43) Veröffentlichungstag der Anmeldung: 22.02.1989
(73) Patentinhaber: Zelenák Frigyesné, Dr., H-1222 Budapest (HU); Berzsenyi, Lászlo, Dr., H-1214 Budapest (HU)
(72) Erfinder: Zelenák Frigyesné, Dr., H-1222 Budapest (HU); Berzsenyi, Lászlo, Dr., H-1214 Budapest (HU)
(74) Vertreter: Lehn, Werner, Dipl.-Ing.
(86) Internationale Anmeldenummer: HU8800008
(87) Internationale Veröffentlichungsnummer: WO8806411

(56) Entgegenhaltungen:
- DE-A- 2 122 033
- DE-C- 699 809
- US-A- 2 927 028
- Wasser und Luft, s.w. Souici und K.-E. Quentin, s.467-473 Springer Verlag, Berlin (1969).
- J. Schormüller "Handbuch der Lebensmittelchemie", vol. III/part 1, published on 1969 by Springer-Verlag (Berlin, Heidelberg, New York), pages 15-17

## Beschreibung

Diese Erfindung betrifft ein Verfahren zur Herstellung von mit molekularem Sauerstoff gesättigten Getränken, bei dem das zur Herstellung des Getränkes verwendete Wasser gereinigt, auf 0 bis 5^{o}C gekühlt, unter einem Druck mit Sauerstoff gesättigt und nachträglich in Flaschen gefüllt wird.

Ein derartiges Verfahren ist aus DE-PS 699809 bekannt. Nach der Sättigung des Wassers mit Sauerstoff unter einem hohen Druck erfolgt aber nicht gleich eine Abfüllung in die Flaschen, sondern das imprägnierte Wasser muß durch mehrere, hintereinander schleusenartig geschaltete Beruhigenskammern mit immer niedrigerem Druck geführt werden, bis ein für das Abfüllen geeigneter Druck erreicht ist. Durch eine derartige Vorgehensweise besteht jedoch die Gefahr, daß erhebliche Mengen an Sauerstoff aus dem Wasser entweichen können, bis das Wasser in die Flaschen abgefüllt wird.

Aus "Wasser und Luft, S.V. Souci und K.-E. Quentin, Seiten 467 bis 473, Springer Verlag, Berlin 1969" ist bekannt, Wasser mit Kohlendioxid unter einem erhöhten Druck zu imprägnieren. Zum Abfüllen wird eine Füllanlage, nämlich ein Rundfüller, verwendet.

Es ist bekannt, daß die physische Müdigkeit in erster Linie als Folge eines Sauerstoffmangels im Blut (Hypoxie) und Sauerstoffmangels im Hämoglobin auftritt. Die Sättigung des Blutes mit Sauerstoff erfolgt bekanntlich über die Atmung. Bei starker physischer Belastung kann die Sauerstoffsättigung des Blutes durch Atmung ungenügend sein, sei es, weil die Leistungsfähigkeit der Lunge begrenzt ist, sei es, weil in der umgebenden Luft die Sauerstoffkonzentration unzureichend ist.

Die Sauerstoffeinspeisung über den Magen ist wirkungsvoller und ist als klinisches Verfahren bekannt. Eine derartige Sauerstoffversorgung hat neben der Sauerstoffversorgung der Muskelzellen noch andere physiologische Gründe. Dies ist aus den von Marsak, M.E. (1971) und Sirotkin, M.N. (1968) veröffentlichten Literaturstellen bekannt. Nach Karpenko (Karpenko et al.: Die Wiederherstellung der Arbeitskraft von Sportlern nach starker Trainingsbelastung, Moskau 1974) wurde Sportlern ein mit Sauerstoff gesättigter Schaumcocktail verabreicht, und die Wirkungen waren positiv. Zu diesem Schaumcocktail wurde ein Hagebuttensirup spezieller Zusammensetzung verwendet, und als Netzmittel - zur Erzielung einer großen Oberfläche - wurde dem Cocktail Hühnereiweiß zugesetzt. Letzteres ist jedoch nachteilig, denn der Eiweißschaum fällt bei Berührung mit der flüssigen Phase zusammen, und wegen der Verderblichkeit des Eiweißes ist das Getrank nur sehr beschränkt haltbar.

Der Erfindung liegt daher die Aufgabe zugrunde, die Anreicherung des Sauerstoffes in Getränken auf Fruchtbasis beziehungsweise in Mineralwassern durch ein einfaches Verfahren zu erreichen.

Diese Aufgabe wird gelöst durch ein Verfahren zur Herstellung von mit molekularem Sauerstoff gesättigten Getränken gemäß Oberbegriff des Anspruchs 1, wobei das Verfahren dadurch gekennzeichnet ist, daß die Sättigung unter einem Druck von 0,3 bis 0,4 MPa erfolgt und daß der Druck bis zur Füllung aufrechterhalten wird.

Vorteilhafte Ausgestaltungen des erfindungsgemäßen Verfahrens sind Gegenstand der Patentansprüche 2 bis 5.

Auf diese Weise wird ein sauerstoffhaltiges Getränk hergestellt, das dem Wasser sauerstoffreicher Quellen ähnlich ist. Im Vergleich zu den herkömmlichen Abfüllverfahren ist es möglich, daß das Getränk nachträglich von dem Verbraucher auch mit Geschmackstoffen versehen wird. Zu diesem Zweck wird in einer speziellen Einheitsverpackung zusätzlich zu dem in Flaschen abgefüllten Getränk noch ein entsprechend abgepackter Sirup geliefert.

Der Vorteil dieser Vorgehensweise besteht darin, daß die Haltbarkeitsdauer erhöht werden kann, weil die natürliche Oxidation der Fruchsäfte keine Rolle spielt und weil zudem Getränke ohne Geschmacks- oder Fruchtsaftzusätze eine Haltbarkeitsdauer von 12 Monaten haben, während die Haltbarkeitsdauer lediglich sechs Monate beträgt, wenn derartige Zusätze vorhanden sind.

Grundlage des Verfahrens ist die Tatsache, daß die in Gasen durch Absorption gebundene Gasmenge eine Funktion der Temperatur ist. Das Getränk wird in druckfeste Faschen von 0,25, 0,33 beziehungsweise 0,5 l Volumen gefüllt, mit Kronenkorken verschlossen und in den Handel gebracht. Das auf diese Weise hergestellte Getränk hat einen Sauerstoffgehalt von 32-36 mg/l. Sein Trockensubstanzgehalt beträgt 9-11 %, sein Säuregehalt (ausgedrückt als Zitronensäure) 0,35-0,4 %, der Kaliumsorbatgehalt 0,1 %.

Zur Herstellung der Getränke werden Mineralwässer - im Naturzustand oder aromatisiert - oder Leitungswasser verwendet. Das Getränk kann auch nachträglich vom Verbraucher durch Zusatz von Fruchtsirup aromatisiert werden.

Die Erfindung wird im folgenden an Hand von Ausführungsbeispielen näher erläutert.

Mit dem Mineralwasser oder Leitungswasser wird ein übliches physikalisches Reinigungs verfahren durchgeführt. Dann werden, je nachdem ob die Geschmacksstoffe während der herstellung oder nachträglich zugegeben werden folgende Arbeitsgänge vorgenommen.

### 1. Sättigen von nicht aromatisierten Mineralwässern mit molekularem Sauerstoff

Das Mineralwasser wird durch Filtrieren gereinigt und dann auf 2-3 ^{o}C gekühlt. Bei dieser Temperatur wird das Mineralwasser in einer Saturiereinrichtung bei einem Druck von 0,3-0,4 MPa mit Sauerstoff gesättigt. Anschließend erfolgt das Abfüllen in druckfeste, durchsichtige oder grüne Flaschen von 0,25, 0,33 oder 0,5 Liter Volumen, die dann maschinell mit Kronenverschlüssen verschlossen werden. Nach dem Aufkleben der Etiketten werden die Flaschen in die üblichen Gitterkisten aus Kunststoff oder in spezielle Einheitsverpackungen verpackt.

### 2. Sättigen von aromatisiertem Mineralwasser oder Leitungswasser mit Sauerstoff.

Das Wasser wird vorbereitet und mit vorher getrennt hergestellten Stammlösungen aromatisiert. Nach dem Vermischen wird das aromatisierte Wasser auf 3-4 ^{o}C gekühlt und dann in einer Saturiereinrichtung unter einem Druck von 0,3-0,5 MPa mit Sauerstoff gesättigt. Abfüllen und Verpacken erfolgen wie unter Punkt 1 beschrieben.

### 3. Herstellung der zum Aromatisieren verwendeten Stamm-Lösungen (die Mengenangaben beziehen sich auf 100 Liter fertiges Getränk).

### 3.1 Getränk mit Zitronencharakter

| | |
|---|---|
| Zuckerlösung (aus kristalliner Saccharose oder Fructose, Trockensubstanzgehalt 65 Refr.-%) | 14,0 kg |
| kristalline Zitronensäure | 0,35 kg |
| kristallines Kaliumsorbat | 0,1 kg |
| naturechtes Zitronenaroma | 0,01 kg |
| Kochsalz | 0,05 kg |

### 3.2 Apfelgetränk

| | |
|---|---|
| Apfelkonzentrat (Trockensubstanzgehalt 68 Refr.-%) | 12,0 kg |
| Zitronensäure | 0,12 kg |
| Kaliumsorbat | 0,10 kg |
| Kochsalz | 0,05 kg |

### 3.3 Citrusgetränk

| | |
|---|---|
| Citruskonzentrat (Zitrone oder Apfelsine, Trockensubtanzgehalt 68 Refr.-%) | 12 kg |
| Zitronensäure | 0,06 kg |
| Kaliumsorbat | 0,1 kg |
| Kochsalz | 0,05 kg |

### 3.4 Hagebuttengetränk

| | |
|---|---|
| Hagebuttensirup (68 Refr.-%) | 12 kg |
| Zitronensaure | 0,10 kg |
| Kaliumsorbat | 0,10 kg |
| Kochsalz | 0,05 kg |

### 3.5 Kaltgetränk mit Teecharakter

| | |
|---|---|
| Zuckerlösung (65 Refr.-%) | 14 kg |
| Zitronensäure | 0,4 kg |
| Kaliumsorbat | 0,1 kg |
| Kochsalz | 0,05 kg |
| natürlicher Pflanzenextrakt (z.B. Tee, Kamille, Lindenblüte, Ingwer) | 0,1 kg |

### 4. Technologie und Arbeitsschutz

Die Vorschriften für Behandlung, Lagerung und Transport von Gasflaschen sind in dem ungarischen Standard MSZ 6292-52 beschrieben.

Die Vorgehensweise entspricht der Herstellung von Erfrischungsgetränken mit Kohlensäure mit dem Unterschied, daß an Stelle der CO₂-Flasche die Sauerstoffflasche angebracht wird. Das Gas wird unter Zwischenschaltung eines Reduzierventils und einer Leitung direkt in die Saturiervorrichtung eingeleitet. In das System darf keinerlei Öl gelangen, weil dies zu Explosionen führen kann. Das Arbeiten mit Sauerstofffaschen erfordert strenge Einhaltung der technologischen Vorschriften.

Durch die Verwendung von Mineralwasser als Grundlösung soll eine synergistische Wirkung der darin enthaltenen Mikroelemente angestrebt werden. Es ist bekannt, daß die Mikroelemente stimulierend auf die Arbeitsfähigkeit wirken, wie anzunehmen ist, durch die Aktivierung bestimmter Enzyme im Blutplasma. Die erfrischende Wirkung des Getränks, seine regenerierende Fähigkeit wurde in klinischen Untersuchungen getestet.

Die Wirkung von sauerstoffgesättigten Getränken wurde vom Landesinstitut für Körpererziehung und Sportgesundheitswesen und auch in zahlreichen Trainingslagern lange und gründlich untersucht (Pucsok et al.: Bericht über die leistungsfördernde Wirkung von mit Sauerstoff angereicherten Getränken auf der Basis von Apenta-Mineralwasser und über die damit verbundenen sonstigen physiologischen Untersuchungen (1985)). Die leistungsfördernde Wirkung wurde durch Messung der Geschwindigkeit von Läufern und der Zeit der Gesamtleistung untersucht, während zur Kennzeichnung der physiologischen Veränderungen der Sauerstoffpartialdruck des arterialisierten Kapillarblutes, der für den jeweiligen Blut-pH berechnete Sauerstoffsättigungswert und die für den Säure-Basen-Haushalt charakteristischen sonstigen Parameter (der Patialdruck des Kohlendioxids, der aktuelle und der Standard-Bikarbonatgehalt, die Abnahme des Basenbestandes und die Änderung des Blutlactatgehaltes) herangezogen wurden.

Die Untersuchungen wurden immer in randomisierter Anordnung und mit einer Kontrolle durchgeführt. Als Kontrolle diente Apenta-Mineralwasser. Zur Beurteilung der Wirkung wurden die im Labor gemessenen ergometrischen Belastungen, die auf der Bahn und in den Wettkampfen gemessenen genauen Leistungen und die subjektiven Eindrücke der Wettkämpfer gleichermaßen herangezogen. Die Untersuchungen erstreckten sich auf folgende Sportarten: Teakwondo, Basketball, Volleyball, Fußball, Boxen, Fechten, Athletik (Laufen und Werfen), Tennis, Eisschnell- und Eiskunstlauf. An den Versuchen nahmen etwa 200 Sportler teil. Im Endergebnis der Studie wurde betont, daß das Getränk zu weiteren Versuchen und zur Vorbereitung auf Wettkampfe unbedingt verwendet werden soll. Sowohl die objektiven wie auch die subjektiven Erfahrungen zeigen, daß das Getränk auf allen Gebieten angewendet werden kann, wo die Werktätigen Getranke zu sich nehmen. Das mit Sauerstoff angereicherte Getränk dient in erster Linie zur schnellen Regenerierung nach annaltender, erschöpfender physischer Arbeit und ist deswegen Sportlern besonders zu empfehlen. Mit der Herstellung des sauerstoffhaltigen Getränks hat sich das Fachkollegium des Landesinstitutes für Köpererziehung beschäftigt und das Getränk für die Verköstigung von Sportlern zugelassen. Zur Bestimmung der Sauerstoffaufnahmkapazität, der Klärung des Wirkungsmechanismus, der Aktivität der am Binden des Sauerstoffs beteiligten Enzyme sind weitere Forschungen im Gange.

Die Erfindung wird durch folgende Beispiele näher veranschaulicht. Die angegebenen Rezepte beziehen sich auf jeweils 100 Liter Getränk.

### Beispiel 1

| | |
|---|---|
| Zucker | 8,0 kg (oder 7 kg Fructose) |
| Zitronensäure | 0,35 kg |
| naturechtes Zitronenaroma | 0,010 kg |
| Kaliumsorbat | 0,100 kg |
| Kochsalz | 0,050 kg |
| Wasser | 91,490 kg |
| gelöster Sauerstoff | 0,0036 kg |

### Beispiel 2

| | |
|---|---|
| Zucker | 8,0 kg (o. 7 kg Fruct.) |
| Zitronensäure | 0,35 kg |
| naturechtes Zitronenaroma | 0,010 kg |
| Kaliumsorbat | 0,100 kg |
| Mineralwasser (von Fonyód, Kekkut, Mohai Agnes usw.) | 91,490 kg |
| gelöster Sauerstoff | 0,0036 kg |

### Beispiel 3

| | |
|---|---|
| Apfelkonzentrat (68 Refr.-%) | 12 kg |
| Zitronensäure | 0,12 kg |
| Kaliumsorbat | 0,10 kg |
| Kochsalz | 0,05 kg |
| Wasser | 87,73 kg |
| gelöster Sauerstoff | 0,0036 kg |

### Beispiel 4

| | |
|---|---|
| Mineralwasser (s. oben) | 100 Liter |
| gelöster Sauerstoff | 0,0036 kg |

### Beispiel 5

| | |
|---|---|
| Zitronen- oder Apfelsinenkonzentrat, 68 Refr.-%) | 12 kg |
| Zitronensäure | 0,06 kg |
| Kaliumsorbat | 0,1 kg |
| Kochsalz | 0,05 kg |
| Wasser | 87,79 kg |
| gelöster Sauerstoff | 0,0036 kg |

### Beispiel 6

| | |
|---|---|
| Hagebuttensirup, 68 Refr.-% | 12 kg |
| Zitronensäure | 0,1 kg |
| Kaliumsorbat | 0,1 kg |
| Kochsalz | 0,05 kg |
| gelöster Sauerstoff | 0,0036 kg |
| Wasser | 87,75 kg |

### Beispiel 7

| | |
|---|---|
| Zucker oder Fructose | 8 kg |
| Zitronensäure | 0,35 kg |
| Kaliumsorbat | 0,10 kg |
| Kochsalz | 0,05 kg |
| Pflanzenextrakt | 0,10 kg |
| Wasser | 91,40 kg |
| gelöster Sauerstoff | 0,0036 kg |

## Patentansprüche

1. Verfahren zur Herstellung von mit molekularem Sauerstoff gesättigten Getränken, bei dem das zur Herstellung des Getränkes verwendete Wasser gereinigt, auf 0-5°C gekühlt, unter einem Druck mit Sauerstoff gesättigt und nachträglich in Flaschen gefüllt wird, dadurch **gekennzeichnet,** daß die Sättigung unter einem Druck von 0,3-0,4 MPa erfolgt und der Druck bis zur Füllung aufrechterhalten wird.

2. Verfahren nach Anspruch 1, dadurch **gekennzeichnet,** daß als Wasser Mineralwasser verwendet wird.

3. Verfahren nach Anspruch 1 oder 2, dadurch **gekennzeichnet,** daß die Füllung in Flaschen höchstens 0,5 Liter Volumen erfolgt.

4. Verfahren nach einem der Ansprüche 1 bis 3, dadurch **gekennzeichnet,** daß das Ausgangswasser vor der Sauerstoffzugabe mit zum Aromatisieren dienenden Stammlösungen vermischt wird.

5. Verfahren nach einem der Ansprüche 1 bis 3, dadurch **gekennzeichnet,** daß die gefüllten Flaschen mit getrennt verpackten Aromastoffen zusammen in Einheitspackungen verpackt werden.

## Claims

1. Process for producing drinks saturated with molecular oxygen, in which the water used for producing the drink is cleaned, cooled to 0 to 5°C, saturated under pressure with oxygen and subsequently filled into bottles, **characterized in that** the saturation ensues at a pressure of 0.3 - 0.4 MPa and that the pressure is maintained up to filling.

2. Process according to claim 1, **characterized in that** mineral water is used as water.

3. Process according to claim 1 or 2, **characterized in that** the filling ensues in bottles having a maximum volume of 0.5 liters.

4. Process according to one of the claims 1 to 3, **characterized in that** the stock solutions serving for aromatisation is mixed with the starting water before the addition of oxygen.

5. Process according to one of the claims 1 to 3, **characterized in that** the filled bottles are packaged together with separately packed flavouring substances in unitary packages.

## Revendications

1. Procédé de production de boissons saturées avec de l'oxygène moléculaire, dans lequel on épure l'eau utilisée pour la préparation de la boisson, on la refroidit à une température comprise entre 0 et 5°C, on la sature en oxygène en opérant sous pression, puis on opère la mise en bouteille, caractérisé en ce que la saturation s'effectue sous une pression comprise entre 0,3 et 0,4 MPa et la pression est maintenue jusqu'au remplissage.

2. Procédé selon la revendication 1, caractérisé en ce que l'on utilise code eau de l'eau minérale.

3. Procédé selon la revendication 1 ou 2, caractérisé en ce que le remplissage s'effectue dans des bouteilles d'une contenance maximale de 0,5 litre.

4. Procédé selon l'une des revendications 1 à 3, caractérisé en ce que l'eau initiale est mélangée avec apport d'oxygène avec des solutions mères servant à aromatiser.

5. Procédé selon l'une des revendications 1 à 3, caractérisé en ce que les bouteilles remplies sont emballées dans des emballages unitaires, conjointement avec des substances aromatiques emballées séparément.
